# EUROPÄISCHE PATENTSCHRIFT

(11) **EP 2 081 716 B1**
(45) Veröffentlichungstag und Bekanntmachung des Hinweises auf die Patenterteilung: **08.03.2017**
(21) Anmeldenummer: 07819332.3
(22) Anmeldetag: 25.10.2007
(51) Int. Cl.: B23B 31/20, B25B 13/48, F16B 23/00, F16B 41/00, B25B 13/50

(54) **SPANNZANGE SOWIE SPANNVORRICHTUNG DAMIT**
COLLET CHUCK AND CLAMPING DEVICE WITH IT
PINCE DE SERRAGE ET DISPOSITIF DE SERRAGE LA COMPRENANT

(30) Priorität: 26.10.2006 DE 102006050632; 14.09.2007 DE 102007043889; 14.09.2007 DE 102007043890
(43) Veröffentlichungstag der Anmeldung: 29.07.2009
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Bockhorni & Kollegen
(86) Internationale Anmeldenummer: PCT/EP2007/009284
(87) Internationale Veröffentlichungsnummer: WO 2008/049621

(56) Entgegenhaltungen:
- EP-A- 0 618 030
- EP-A- 0 637 484
- EP-A- 1 449 607
- EP-A- 1 710 033
- WO-A-02/057039
- AU-A- 2 129 870
- DE-A1- 4 405 242
- DE-C- 482 024
- FR-A- 1 176 761
- GB-A- 2 241 996
- US-A- 1 952 109
- US-A- 2 272 185
- US-A- 2 609 209
- US-A- 3 385 606
- US-A1- 2004 172 799
- US-A1- 2006 115 337
- "ISO 15488 - Collets with 8 degree setting angle for tool shanks -- Collets, nuts and fitting dimensions" INTERNATIONAL STANDARD - ISO, ZUERICH, CH, 2003, Seiten 1-12, XP008088546

## Beschreibung

Die vorliegende Erfindung betrifft eine Spannzange nach dem Oberbegriff von Anspruch 1 und wie aus der DE 44 0 242 bekannt. Die Erfindung betrifft auch eine Spannvorrichtung mit einer solchen Spannzange.

Es ist bekannt, rotierende Werkzeuge, wie zum Beispiel Bohrer und insbesondere Fräswerkzeuge, in einer Spannvorrichtung einer Werkzeugmaschine zu halten. Solche Spannvorrichtungen, insbesondere so genannte ER-Spannzangenfutter nach der ISO 15488, umfassen einen Grundkörper mit einem kupplungsseitigen Ende für die Aufnahme in einer Werkzeugmaschine und einem werkzeugseitigen Ende mit einer zur Drehachse des Werkzeugs zentrischen Aufnahmebohrung, in die ein Schaft eines Werkzeugs von dem vorderen Stirnende des werkzeugseitigen Endes des Grundkörpers her axial einsteckbar ist, eine in der Aufnahmebohrung axial beweglich angeordnete, den Schaft umschließende Spannzange mit einem im Wesentlichen vom vorderen Stirnende des Grundkörpers weg sich konisch verjüngenden Abschnitt ihres Außenmantels, der sich an einem gleichsinnig sich verjüngenden konischen Abschnitt des Innenmantels der Aufnahmebohrung abstützt, und eine die Spannzange relativ zur Aufnahmebohrung axial in diese hineinzwingende Spannmutter mit einem Innengewinde, das in Eingriff mit einem Außengewinde des Grundkörpers steht. Das mit seinem zylindrischen Schaft in die Spannzange eingesteckte Werkzeug wird beim Anziehen der Spannmutter, die so die Spannzange in die Aufnahmebohrung hineinzwängt und so den Innendurchmesser der Spannzange verringert, radial geklemmt. Die Kompressibilität der Spannzange wird durch radial die Spannzange durchgreifende Schlitze bereitgestellt.

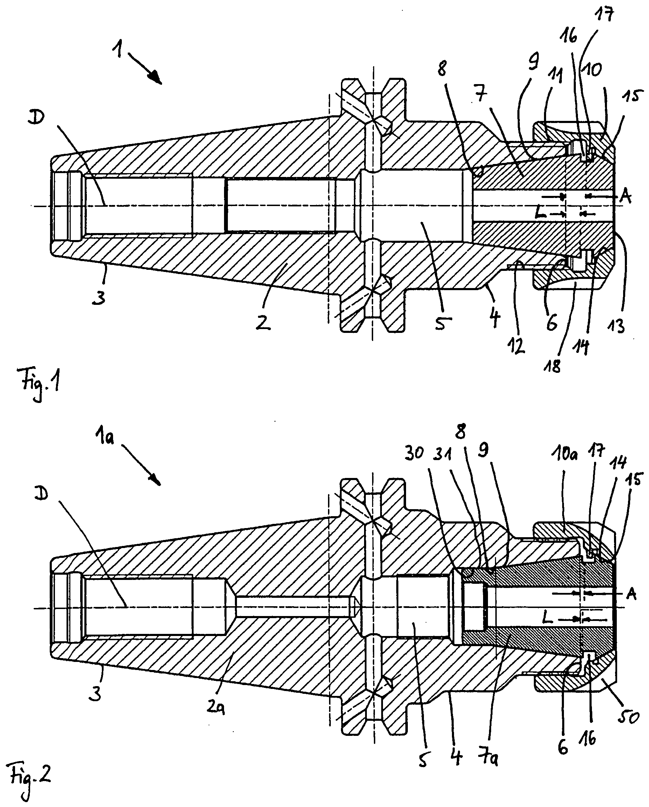

Im Rahmen dieser Erfindung sollen nur Spannvorrichtungen mit einem Neigungswinkel der Erzeugenden des konisch sich verjüngenden Abschnitt der Spannzange relativ zur Drehachse von größer 2° umfasst sein, wobei der Neigungswinkel bei einer Spannvorrichtung gemäß ISO 15488 beträgt, wie sie in Fig. 1 dargestellt ist. Bekannte ER-Spannzangenfutter sind sehr flexibel. Aufgrund ihrer großzügigen Schlitzbreiten decken die Spannzangen dieser ER-Spannzangenfutter einen relativ großen Spannbereich in der Größenordnung von etwa 1 mm ab, d.h. dass eine Spannzange mit einer Aufnahme für Werkzeuge mit einem Schaftdurchmesser von 10 mm auch noch Schaftdurchmesser von 9 mm spannen kann. Dies wird dadurch erreicht, dass die Spannzange bei kleineren Schaftdurchmessern weiter in die Aufnahmebohrung des Grundkörpers hineingezwungen wird und sich so im Rahmen der durch die Schlitze ermöglichten Kompressibilität weiter schließt.

Nachteilig an dieser Spannvorrichtung ist jedoch, dass die Zange nur in einem relativ kurzen axialen Bereich der Aufnahmebohrung radial abgestützt wird. Dadurch verschlechtern sich sowohl die Rundlaufgenauigkeit als auch die Steifigkeit des gespannten Werkzeugs. Wenn zudem noch die Einstecktiefe des Werkzeugschaftes geringer ist als die axiale Ausdehnung der Spannzange, dann gibt es Bereiche der Spannzange, in denen der Werkzeugschaft nicht innen anliegt. Da in diesem Bereich die Klemmkraft der Spannzange nicht vom Werkzeugschaft durch Abstützung aufgefangen wird, kann es dazu kommen, dass sich die Wandung der Spannzange wölbt und/oder die Spannzange in der Aufnahmebohrung verkantet. Dies vermindert nicht nur weiter die Rundlaufgenauigkeit, sondern kann dazu führen, dass Spannzange und Grundkörper beschädigt werden.

Der vorliegenden Erfindung liegt die Aufgabe zugrunde, diese Nachteile der bisher herkömmlichen Spannvorrichtungen dieses Typs zu beseitigen und so die Rundlaufgenauigkeit sowie die Haltbarkeit der Spannvorrichtung zu erhöhen.

Diese Aufgabe wird gelöst mit einer Spannzange gemäß Anspruch 1 und einer Spannvorrichtung gemäß Anspruch 5.

Vorteilhafte Weiterbildungen dieser Gegenstände bilden den Inhalt der abhängigen Unteransprüche.

Die erfindungsgemäße Spannvorrichtung für ein rotierendes Werkzeug umfasst einen Grundkörper mit einer zur Drehachse zentrischen Aufnahmebohrung, in die ein Schaft eines Werkzeugs von dem werkzeugseitigen vorderen Stirnende des Grundkörpers her axial einsteckbar ist, eine in der Aufnahmebohrung axial beweglich angeordnete, den Schaft umschließende Spannzange mit einem im Wesentlichen vom vorderen Stirnende des Grundkörpers weg sich konisch verjüngenden Abschnitt ihres Außenmantels, der sich an einem gleichsinnig sich verjüngenden konischen Abschnitt des Innenmantels der Aufnahmebohrung abstützt, und eine die Spannzange relativ zur Aufnahmebohrung axial in diese hineinzwingende Zangenspannvorrichtung, insbesondere eine Spannmutter mit einem Innengewinde, das in Eingriff mit einem Außengewinde der Spannzangenaufnahme steht. Als Zangenspannvorrichtung kommen auch andre Vorrichtungen in Betracht, wie die in DE 197 29 249 C2 und DE 44 05 242 A1 gezeigten. Dabei ist der Neigungswinkel der Erzeugenden des konisch sich verjüngenden Abschnitts der Aufnahmebohrung relativ zur Drehachse größer 2° und beträgt bevorzugt 8°, insbesondere für die Aufnahme von Spannzangen gemäß ISO 15488. Schließlich weist die Spannzange anschließend an den, d.h. in Bezug auf das vordere Stirnende des Grundkörpers hinter dem konisch sich verjüngenden Abschnitt einen zylindrischen Abschnitt auf, der zusammen mit einem zylindrischen Abschnitt der Bohrung eine Passung, insbesondere Übergangspassung, bevorzugt eine Fügepassung bildet.

Durch den zylindrischen Abschnitt der Spannzange, der eine Passung mit dem Grundkörper bildet, sitzt die Spannzange tiefer im Grundkörper. Außerdem stützt sie sich aufgrund der Passung direkt an dem Grundkörper ab. Zusätzlich wird die Spannzange im Grundkörper zentriert und es wird ein Verkippen der gesamten Spannzange verhindert. Dadurch werden Störeinflüsse (z.B. durch ein ungenaues Gewinde der Spannmutter u. dgl.) auf die Genauigkeit der Werkzeugspannung vermindert, weshalb die erfindungsgemäße Spannvorrichtung eine wesentlich höhere Rundlaufgenauigkeit aufweist als herkömmliche Spannvorrichtungen dieses Typs.

Die Spannzange weist in Umfangsrichtung verteilt mehrere in im Wesentlichen in axialer Richtung langgestreckt verlaufende Schlitze auf, die die Spannzange zumindest teilweise radial durchdringen und jeweils zumindest in einem axialen Abschnitt der Spannzange vorgesehen sind, wobei die Anzahl der Schlitze und ihre Breite bevorzugt so bemessen ist, dass der Spannbereich der Spannzange weniger als 0,5 mm beträgt. Dadurch ist zwar im Vergleich zu herkömmlichen Spannvorrichtungen dieses Typs der Spannbereich eingeschränkt, jedoch wird die Rundlaufgenauigkeit zusätzlich erhöht, da Verkippungsfehler noch stärker reduziert werden. Dies wird noch dadurch begünstigt, dass der zylindrische Abschnitt der Spannzange im Wesentlichen keine Schlitze aufweist. Dadurch kann die Spannzange beim Spannen nicht verkanten, da sie in diesem zylindrischen Bereich nicht flexibel ist. Zusätzlich erhöht dieser nichtgeschlitzte zylindrische Abschnitt die Abstützung der Zange, so dass diese nun nicht mehr aufgewölbt wird, wenn die Einstecktiefe des Werkzeugschaftes in Bezug auf die axiale Länge der Spannzange geringer ist. Durch die schmaleren Schlitze wird außerdem die Torsionssteifigkeit der Spannzange erhöht.

Die Spannzange weist in Bezug auf die minimale Einstecktiefe des Werkzeugs zwei verschiedene Arten von Schlitzen auf, wobei die erste Art Schlitze sich von dem in Bezug auf die Aufnahme des Werkzeugs vorderen Stirnende der Spannzange weg erstreckt bis auf eine axiale Position, die geringer ist, als die minimale Einstecktiefe, während die zweite Art Schlitze von dem vorderen Stirnende der Spannzange beabstandet angebracht ist. Dadurch gibt es in der Spannzange zum einen keine durchgehenden Schlitze, was die Steifigkeit der Spannzange erhöht. Zum anderen wird aufgrund der axialen Lage des Werkzeugschaftes verhindert, dass Flüssigkeiten aus der Aufnahmebohrung und am Werkzeug vorbei in den Werkzeugarbeitsbereich gelangen. Dieses Ziel war bei herkömmlichen Spannzangen dieses Typs nur unter Einbindung von Dichtungsscheiben zwischen Spannmutter und Spannzange möglich. Es ergibt sich hierdurch eine wesentlich konstruktive Vereinfachung, die zusätzlich die Auskraglänge des Werkzeuges vermindert und so dessen Steifigkeit erhöht.

Da zumindest einige der Schlitze der zweiten Art in Bezug auf das vordere Stirnende der Spannzange an ihrem hinteren Ende in jeweils einer Entlastungsbohrungen münden, treten im Bereich des Übergangs zwischen geschlitztem und ungeschlitztem Material der Spannzange weniger Ermüdungserscheinungen auf.

In Bezug auf den Umfang der Spannzange ist jeweils zwischen zwei Schlitzen der ersten Art ein Schlitz der zweiten Art angeordnet, wobei die Schlitze der ersten Art axial kürzer sind als die der zweiten Art, so dass über den gesamten Umfang der Spannzange betrachtet jeweils von den kürzeren Schlitzen die doppelte Anzahl in Bezug auf die längeren Schlitze vorhanden ist. Dadurch ist sichergestellt, dass bei den kürzeren Schlitzen eine geringere Kompression auftritt, und deshalb die Ermüdung im Übergangsbereich der kurzen Schlitze zum Spannzangenmaterial reduziert ist. Durch zusätzliche Einbringung von radialen Entlastungsbohrungen im Übergangsbereich von Schlitzen der ersten Art zu Schlitzen der zweiten Art, in die die kurzen Schlitze münden, wird die Materialermüdung noch zusätzlich reduziert. Zusätzlich können natürlich auch an einigen oder allen anderen Ende aller Schlitze, solche Entlastungsbohrungen vorgesehen sein.

Weiterhin stützt sich angrenzend an das vordere Stirnende der Spannzange eine vom vorderen Stirnende der Spannzange weg sich konisch erweiternder Abschnitt ihres Außenmantels an einem gleichsinnig sich erweiternden konischen Abschnitt des Innenmantels der Spannmutter ab, wobei der Neigungswinkel der Erzeugenden des konisch sich erweiternden Abschnitt der Spannzange relativ zur Drehachse bevorzugt 30° ist und im Übergangsbereich zwischen dem konisch sich erweiternden und dem konisch sich verjüngenden Abschnitt der Spannzange eine Nut angeordnet ist, in die ein Vorsprung der Spannmutter eingreift. Der Überlappungsbereich der Schlitze der ersten und zweiten Art ist so angeordnet, dass er nicht im Bereich der Nut liegt. So kann bei ausreichender Einstecktiefe des Werkzeugschaftes verhindert werden, dass Flüssigkeit aus der Aufnahmebohrung durch die Schlitze am Werkzeug vorbei in den Werkzeugarbeitsbereich austritt. In einer bevorzugten Ausführungsform liegt der Überlappungsbereich zwischen der Nut und dem vorderen Stirnende der Spannzange. Hier werden die Schlitze bereits bei einer sehr kurzen Einspannlänge des Werkzeugschaftes gegeneinander abgedichtet. Zudem erhöht sich die Torsionssteifigkeit. Grundsätzlich ist festzustellen, dass die Torsionssteifigkeit umso höher ist, je näher sich der Überlappungsbereich zwischen Schlitzen der ersten und der zweiten Art zu dem vorderen Stirnende der Spannzange befindet.

Vorteilhaft weist die in Bezug auf das vordere Stirnende der Spannzange hintere Umfangsfläche der Nut relativ zu dem vorderen Stirnende des Grundkörpers im unverspannten Zustand einen axialen Abstand von weniger als 5 mm, bevorzugt weniger als 2 mm auf. Im Gegensatz zu herkömmlichen Spannvorrichtungen dieses Typs ragt die Spannzange so weniger aus dem Grundkörper heraus, so dass die Spannung des Werkzeugs genauer und steifer wird. Außerdem weist dadurch die Spannmutter einen axial gesehen geringeren Abstand zum vorderen Stirnende des Grundkörpers auf als bei herkömmlichen Spannvorrichtungen dieses Typs. Bei dem herkömmlichen Typ kann es aufgrund des relativ großen Abstands dazu kommen, dass die Spannzange über den eigentlichen Spannbereich hinaus noch tiefer in den Grundkörper gezwungen wird, was zu Beschädigungen an der Spannzange führen kann, da der zulässige Verstellweg überschritten wird. Bei der obigen vorteilhaften Ausführung der erfindungsgemäßen Spannvorrichtung hat die Spannmutter einen geringern Abstand von dem vorderen Stirnende des Grundkörpers, so dass die Spannmuter zur Anlage an den Grundkörper kommt, bevor Schäden an der Spannzange entstehen können.

In einer besonders bevorzugten Ausgestaltung der erfindungsgemäßen Spannvorrichtung ist die radiale Wandstärke des Grundkörpers an dessen vorderen Stirnende gleich oder größer als die durchschnittliche radiale Wandstärke der Spannmutter oder in Bezug auf die ISO 15488 betrachtet ist der Außendurchmesser des Grundkörpers an dessen vorderen Stirnende unter Beibehaltung des durchschnittlichen Außendurchmesser der Spannmutter vergrößert. Dadurch wird der Nachteil herkömmlicher Spannvorrichtungen dieses Typs beseitigt, dass aufgrund der relativ geringen Wandstärke des Grundkörpers im Vergleich zum mittleren Außendurchmesser der Spannmutter der Grundkörper bei hoher Beanspruchung reißen kann. Bei dieser besonders bevorzugten erfindungsgemäßen Ausgestaltung ist die Wandstärke des Grundkörpers größer und die Wandstärke der Spannmutter geringer, so dass die Spannvorrichtung bei gleicher Außenumfangskontur der Spannmutter eine größere Festigkeit aufweist. Dabei ist zu betonen, dass die Außenkontur der Spannmuttern solcher Spannvorrichtungen genormt ist und beibehalten werden muss, um Störkanten bei der Fräsbearbeitung zu vermeiden.

Weiterhin wird selbständiger Schutz für Spannzangen beansprucht. Und zwar für eine Spannzange für die erfindungsgemäße Spannvorrichtung, wie sie vorstehend beschrieben wurde. Diese Spannzange weist alle die auf die Spannzange bezogenen Merkmale dieser Spannvorrichtung auf.

Weitere Vorteile, Kennzeichen und Merkmale der vorliegenden Erfindung werden nun im Zusammenhang mit der Beschreibung der Figuren verdeutlicht werden. Darin zeigen
- Fig. 1: eine Spannvorrichtung des herkömmlichen Typs,
- Fig. 2: eine Ausführungsform der erfindungsgemäßen Spannvorrichtung,
- Fig. 3: eine Ausführungsform der erfindungsgemäßen Spannzange für die erfindungsgemäße Spannvorrichtung nach Fig. 2 in einer Längsquerschnittsansicht,
- Fig. 4: die Spannzange nach Fig. 3 in einer Draufsicht auf den konisch sich erweiternden Abschnitt und
- Fig. 5: eine alternative Ausführungsform einer Spannmutter in perspektivischer Darstellung.

In Fig. 1 ist rein schematisch eine Spannvorrichtung 1 des herkömmlichen Typs nach ISO 15488 dargestellt. Diese Spannvorrichtung 1 besteht aus einem Grundkörper 2 mit einem kupplungsseitigen Ende 3 für die Aufnahme in einer Werkzeugmaschine und einem werkzeugseitiges Ende 4 mit einer zur Drehachse D des Werkzeugs zentrischen Aufnahmebohrung 5, in die ein Schaft eines Werkzeugs (nicht gezeigt) von dem vorderen Stirnende 6 des werkzeugseitigen Endes 4 des Grundkörpers 2 her axial einsteckbar ist. Weiterhin ist eine in der Aufnahmebohrung 5 axial beweglich angeordnete, den Schaft umschließende Spannzange 7 vorgesehen mit einem im Wesentlichen vom vorderen Stirnende 6 des Grundkörpers 2 weg sich konisch verjüngenden Abschnitt 8 ihres Außenmantels, der sich an einem gleichsinnig sich verjüngenden konischen Abschnitt 9 des Innenmantels der Aufnahmebohrung 5 abstützt. Schließlich umfasst die herkömmliche Spannvorrichtung 1 noch eine die Spannzange 7 relativ zur Aufnahmebohrung axial in diese hineinzwingende Spannmutter 10 mit einem Innengewinde 11, das in Eingriff mit einem Außengewinde 12 des Grundkörpers 2 steht. Das mit seinem zylindrischen Schaft in die Spannzange 7 eingesteckte Werkzeug wird beim Anziehen der Spannmutter 10, die so die Spannzange 7 in die Aufnahmebohrung 5 hineinzwängt und so den Innendurchmesser der Spannzange 7 verringert, radial geklemmt. Die Kompressibilität der Spannzange 7 wird durch radial die Spannzange 7 durchgreifende Schlitze (nicht dargestellt) bereitgestellt.

Die Spannzange 7 dieser herkömmlichen Spannvorrichtung 1 weist einen vom vorderen Stirnende 13 weg konisch sich erweiternden Abschnitt 14 auf, der sich auf einem konisch gleichsinnig erweiternden Abschnitt 15 der Spannmutter 10 abstützt. Dadurch wird die Zentriergenauigkeit der Spannzange 7 beim Eindrehen der Spannmutter 10 erhöht. Im Übergangsbereich zwischen konisch sich verjüngenden 8 und konisch sich erweiternden Abschnitt 14 weist die Spannzange 7 eine umlaufende Nut 16 auf, in die ein Vorsprung 17 der Spannmutter 10 eingreift, um beim Lösen der Spannmutter 10 die verspannte Spannzange 7 zwangsweise mit zu lösen.

Es ist zu erkennen, dass bei dieser herkömmlichen Spannvorrichtung 1 der Abstand L der Nut von dem vorderen Stirnende 6 des Grundkörpers 2 und damit der Abstand A der Spannmutter 10 von dem vorderen Stirnende 6 relativ groß ist. Dies ist erforderlich, da die Spannzange 7 einen großen Spannbereich von etwa 1 mm abdeckt. Nachteilig ist dabei aber, dass die Spannzange 7 nur in einem relativ kurzen axialen Bereich axial abgestützt wird. Dadurch sind die Rundlaufgenauigkeit als auch die Steifigkeit des gespannten Werkzeugs verringert. Die Rundlaufgenauigkeit bei in solchen herkömmlichen Spannvorrichtungen 1 gespannten Werkzeugen beträgt etwa 0,01 bis 0,05 mm.

Weiterhin ist nachteilig, dass die Spannzange 7 bei Werkzeugen mit einer geringen Einspanntiefe nur über einen kurzen axialen Bereich radial abgestützt wird, so dass die Klemmkraft nicht aufgefangen wird. Dadurch kann es einerseits zu Verkantungen der Spannzange 7 im Grundköper 2 kommen, die die Rundlaufgenauigkeit herabsetzen, und andererseits zu Verformungen und Beschädigungen der Spannzange 7 und des Grundkörpers 2.

Die Wandung im Bereich des vordern Stirnendes 6 des Grundkörpers 2 ist im Vergleich zum mittleren (es kann sich sowohl um Spannmuttern 10 mit einer runden Außenumfangskontur mit eingebrachten axial verlaufenden Nuten 18 handeln, wie in Fig. 1 angedeutet, oder um eine Außenumfangskontur in Form eines geradzahligen Vielkants) Außendurchmesser der Spannmutter 10 und in Bezug auf die Wandungsdicke der Spannmutter 10 relativ dünn. Das hat zur Folge, dass der Grundkörper 2 bei hoher Beanspruchung reißen kann.

Schließlich führt der relativ große Abstand A der Spannmutter 10 vom vorderen Stirnende 6 des Grundkörpers 2 dazu, dass die Spannzange 7 über den eigentlichen Spannbereich noch tiefer in den Grundkörper 2 eingedrückt werden kann, wodurch der zulässige Verstellweg überschritten wird und Beschädigungen an der Spannzange 7 auftreten können.

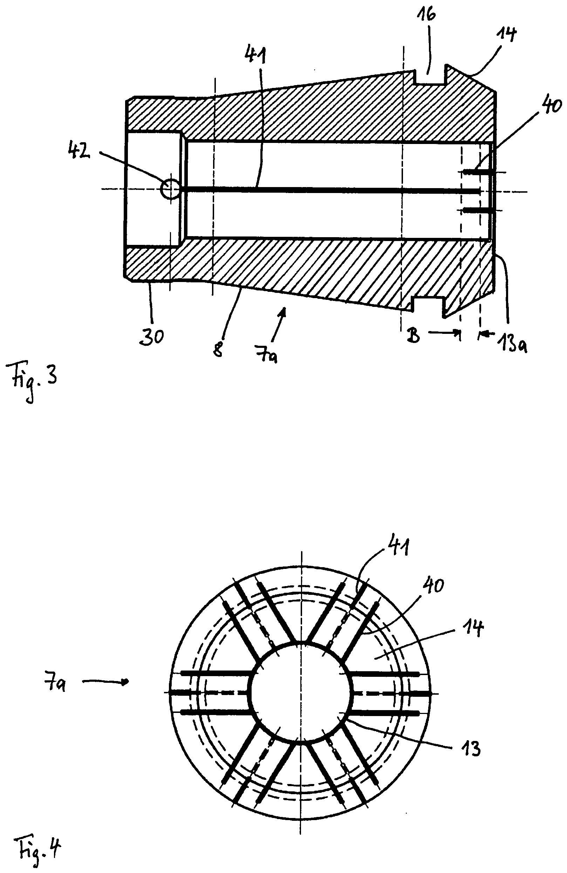

In Fig. 2 ist rein schematisch eine Ausführungsform der erfindungsgemäßen Spannvorrichtung 1a dargestellt, die dem Typ der sogenannten ER-Spannzangenfutter nach ISO 15488 entspricht, wobei gleiche Elemente mit gleichen Bezugszeichen wie in Fig. 1 versehen sind. Es ist deutlich zu erkennen, dass die erfindungsgemäße Spannzange 7a anschließend an den konisch sich verjüngenden Abschnitt 8 einen zylindrischen Abschnitt 30 aufweist, der mit dem zylindrischen Abschnitt 31 der Aufnahmebohrung 5 des erfindungsgemäßen Grundkörpers 2a eine Passung bildet, wobei der zylindrische Abschnitt 8 selbst im Wesentlichen keine Schlitzung aufweist (vgl. Fig. 3). Dadurch kann die Spannzange 7a auf beim Spannen eines kurzen Werkzeugschaftes in dem konisch sich verjüngenden Abschnitt 9 des Grundkörpers 2a nicht verkanten, da die Spannzange 7a in dem zylindrischen Abschnitt 30 nicht flexibel ist. Dieser nichtflexible zylindrische Abschnitt 30 verhindert auch wirksam Aufwölbungen und damit Beschädigungen an der Spannzange 7a. Zweckmäßigerweise ist der zylindrische Abschnitt 30 in den dargestellten Ausführungsformen auch ballig ausgeführt, um das Einführen der Spannzange in den Grundkörper zu erleichtern, wie sich beispielsweise aus Fig. 3 ergibt.

Weiterhin ist durch die in Fig. 3 und 4 rein schematisch aufgezeigte angepasste, d.h. nur schmal ausgeführte Schlitzung der Spannbereich der Spannzange 7a deutlich gegenüber herkömmlichen Spannzangen 7 verringert. Dies erhöht ebenfalls die Rundlaufgenauigkeit. Insgesamt ist die Rundlaufgenauigkeit von in der erfindungsgemäßen Spannvorrichtung gespannten Werkzeugen gegenüber in herkömmlichen Spannvorrichtungen 1 gespannten Werkzeugen auf etwa 5 µm verbessert.

Schließlich sitzt die erfindungsgemäße Spannzange 7a tiefer in dem Grundkörper 2a, wodurch im Vergleich zu den Abständen beim herkömmlichen Typ 1 sowohl der Abstand L der Nut 16 von dem vorderen Stirnende 6 des Grundkörpers 2a als auch der Abstand A der Spannmutter 10a von dem vorderen Stirnende 6 nur sehr gering ist. Dadurch wird die Spannung des Werkzeugs genauer und steifer. Und außerdem kommt die Spannmutter 10a zur Anlage an den Grundkörper 2a bevor der zulässige Verstellweg überschritten wird und damit Schäden an der Spannzange 7a entstehen können.

Die Wandstärke des Grundkörpers 2a ist im Bereich des vorderen Stirnendes 6 dicker verglichen mit dem mittleren Außendurchmesser der Spannmutter 10a, der derselbe ist, wie beim herkömmlichen Typ 1 nach Fig. 1, wobei die Wandung der Spannmutter 10a etwas dünner ist als beim herkömmlichen Typ 1. Dadurch weist die Spannvorrichtung 1 a bei gleicher Außenumfangskontur der Spannmutter 10a eine größere Festigkeit auf.

Die Innenkontur des Grundkörpers 2a ist im konisch sich verjüngenden Abschnitt 9 der Aufnahme 5 der Spannzange 7a mit dem Grundkörper 2 des herkömmlichen Typs 1 nach Fig. 1 im Wesentlichen identisch. Dass heißt, dass nur die axiale Länge des konisch sich verjüngenden Abschnitts 9 geringer ist und daran anschließend sich der zylindrische Abschnitt 31 erstreckt. Dadurch ist es möglich, in dem Grundkörper 2a der erfindungsgemäßen Spannvorrichtung 1a auch herkömmliche Spannzangen 7 zu spannen, die in praktisch allen Betrieben in großer Zahl vorhanden sind. Auf diese Weise kann der Grundkörper 2a zusammen mit der Spannmutter 10a sehr flexibel eingesetzt werden. Andererseits kann die erfindungsgemäße Spannzange 7a aufgrund des zylindrischen Abschnitts 30 nicht in Spannvorrichtungen 1a des herkömmlichen Typs nach Fig. 1 eingesetzt werden, wodurch eine Beschädigung der erfindungsgemäßen Spannzange 7a in diesen herkömmlichen Spannvorrichtungen 1 verhindert wird.

In den Fig. 3 und 4, in denen eine Ausführungsform der erfindungsgemäßen Spannzange 7a in einer Querschnittsansicht bzw. Draufsicht auf das vordere Stirnende 13a der Spannzange 7a dargestellt ist, ist der Verlauf symmetrisch angeordneten, axial angebrachten Schlitze der ersten 40 und zweiten Art 41 deutlich zu erkennen, wobei die Schlitze 41 der zweiten Art wesentlich länger sind und im Übergang des konisch sich verjüngenden Abschnitts 8 der Spannzange 7a zum zylindrischen Abschnitt 30 in Entlastungsbohrungen 42 münden. Sowohl die Schlitze 40, 41 als auch die Entlastungsbohrungen 42 sind radial durch die gesamte Wandung der Spannzange 7a geführt. Der Übergangsbereich B zwischen den Schlitzen erster 40 und zweiter Art 41 liegt oberhalb der Nut 16 im konisch sich erweiternden Abschnitt 14 in unmittelbarer Nähe des vorderen Stirnendes 13 der Spannzange 7a. Auf diese Weise weist die Spannzange 7a nicht nur eine sehr hohe Torsionssteifigkeit auf, sondern ist auch flüssigkeitsdicht innerhalb der Spannvorrichtung 1a, da die Schlitze selbst bei extrem kurzer Einstecktiefe des Werkzeugschaftes, die geringer als die axiale Länge des konisch sich erweiternden Abschnittes 14 der Spannzange ist, gegeneinander abgedichtet sind. Flüssigkeit, die in die Schlitze zweiter Art 41 eindringt, kann somit nicht in die Schlitze erster Art 40 übertreten und damit am Werkzeugschaft vorbei in den Werkzeugarbeitsraum gelangen.

Die Schlitze der ersten Art 40 sind jeweils zu beiden Seiten eines Schlitzes der zweiten Art 41 angeordnet, wodurch sie in doppelter Anzahl vorhanden sind. Trotz ihrer nur relativ kurzen Ausführung ist so sichergestellt, dass im Bereich des Übergangs von Schlitz 40 zu Material der Spannzange 7a keine Ermüdung aufgrund der Spannung auftritt.

Die Spannmutter 10a weist eine Außenumfangskontur entweder in Form eines ungeradzahligen Vielkants oder eine runde Außenumfangskontur mit einer Anzahl über den Umfang gleich beabstandeter ungeradzahliger Nuten 50 (in Fig. 2 angedeutet) auf. Dadurch kann nur ein Spannschlüssel (nicht dargstellt) zum Anziehen oder Lösen der Spannmutter 10a verwendet werden. Dieser Spannschlüssel weist im Gegensatz zu den einarmigen Spannschlüsseln für Spannmuttern 10 des herkömmlichen Typs 1 mindestens zwei in Bezug auf den Drehpunkt des Spannschlüssels auf einer Wirkungslinie gegenüberliegend angeordnete Griffe auf. Dabei ist der Spannschlüssel so an die Außenkontur der Spannmutter 10a angepasst, dass ein Drehmoment auf die Spannmutter 10a zum Anziehen oder Lösen der Spannmutter 10a gegenüber dem Grundkörper 2a bereitgestellt werden kann. Durch diesen Spannschlüssel lassen sich Spannmuttern 10a querkraftfrei anziehen, wodurch die Rundlaufgenauigkeit der Spannvorrichtung 1a zusätzlich erhöht wird.

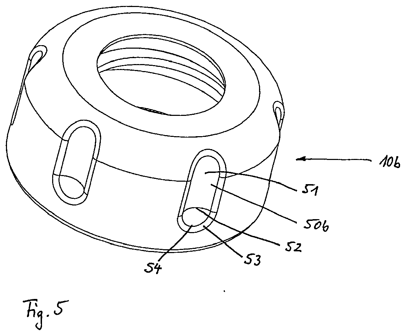

In Fig. 5 ist schließlich rein schematisch eine zur Spannmutter 10a alternativ ausgeführte Spannmutter 10b perspektivisch dargestellt. Spannmutter 10b weist eine runde Außenumfangskontur auf, in der gleichmäßig radial beabstandet eine geradzahlige Anzahl von Nuten 50b angeordnet sind. Jede Nute 50b weist einen kreisbogenförmigen Querschnitt 51 auf, der axial zur Spannmutter 10b in die Außenumfangskontur eingebracht ist, wie die eingezeichnete Linie 52 verdeutlicht. Die Nuten 50b sind ringsum mit einer Phase 53 versehen. Durch die Ausgestaltung der Nuten 50b ist sichergestellt, dass ein herkömmlicher Spannschlüssel trotz der geradzahligen Anzahl von Nuten 50b nicht eingesetzt werden kann. Die Nuten 50b weisen auch einen axialen Anschlag 54 auf, der die Nuten 50b in Bezug auf die Spannmutter 10b axial begrenzt und so einen Anschlag für den Spannschlüssel bildet.

Durch die vorstehenden Ausführungen ist deutlich geworden, dass die erfindungsgemäße Spannvorrichtung 1 a mit der erfindungsgemäßen Spannzange 7a, gegenüber denjenigen des herkömmlichen Typs 1 zahlreiche Vorteile aufweist und besonders flexibel und ökonomisch einsetzbar ist.

Nachfolgend werden rein beispielshalber bezogen auf bestimmte Anwendungsfälle tabellarisch Angaben in mm für den Durchmesser des zylindrischen Abschnitts bzw. Zapfens 30 sowie der Länge des zylindrischen Abschnitts bzw. Zapfens 30 gegeben und zwar für Spannzangen der Größen ER16, ER25 und ER32. Diesen Nenngrößen 16, 25 und 32 ist jeweils ein maximaler Spanndurchmesser des Futters zugeordnet, der in der folgenden Tabelle mit "max. SpannØ" bezeichnet ist. Für den zylindrischen Abschnitt ist in der nachfolgenden Tabelle 1 der Begriff Zapfen verwendet, wobei ein minimaler Zapfendurchmesser sowie maximaler Zapfendurchmesser für die jeweiligen Spannzangen angegeben ist, insbesondere aber auch ein als bevorzugt bezeichneter tatsächlicher Wert für den Zapfendurchmesser. Das gleiche ist auch für die Länge des zylindrischen Abschnitts bzw. die Zapfenlänge angegeben. Alle Werte beziehen sich hierbei auf Millimeter.

**Tabelle 1:**

| Nenngröße | max. SpannØ | ZapfenØ min. | ZapfenØ max. | ZapfenØ tatsächlich | Zapfenlänge min. | Zapfenlänge max. | Zapfenlänge tatsächlich |
|---|---|---|---|---|---|---|---|
| 16 | 10 | 11 | 14 | 12 | 1 | 20 | 8,5 |
| 25 | 16 | 18,5 | 21 | 19,05 | 1 | 20 | 8,3 |
| 32 | 20 | 24 | 29 | 25 | 1 | 25 | 10,4 |

Ferner ergeben sich aus der nachfolgenden Tabelle 2 hierzu auch die Gewindegrößen für die Spannmutter 10a und den Grundkörper 2a (Innengewinde 11 a, Außengewinde 12a gemäß Fig. 2)

**Tabelle 2:**

| Nenngröße | Gewinde |
|---|---|
| 16 | M 24 x 1,5 |
| 25 | M 34 x 1,5 |
| 32 | M 42 x 1,5 |

## Patentansprüche

1. Spannzange (7a) für eine Spannvorrichtung (1a) für ein rotierendes Werkzeug, wobei die Spannvorrichtung (1a) einen Grundkörper (2a) mit einer zur Drehachse (D) zentrischen Aufnahmebohrung (5) aufweist, in die ein Schaft eines Werkzeugs von einem Stirnende (6) des Grundkörpers (2a) und einem Stirnende (13) der Spannzange (7a) her axial einsteckbar ist, wobei die Spannzange (7a) in der Aufnahmebohrung (5) axial beweglich anordenbar ist, um den Schaft zu umschließen,
wobei
die Spannzange (7a) vom vorderen Stirnende (13) aus betrachtet axial hinten einen zylindrischen Abschnitt (30) aufweist, der zusammen mit einem zylindrischen Abschnitt (31) der Aufnahmebohrung (5) eine Passung, insbesondere eine Übergangspassung, bevorzugt eine Fügepassung bilden kann, und die Spannzange (7a) einen sich an den zylindrischen Abschnitt (30) anschließenden und sich in Richtung des zylindrischen Abschnitts konisch verjüngenden Abschnitt (8) ihres Außenmantels aufweist, wobei der sich konisch verjüngende Abschnitt (8) der Spannzange (7a) an einem gleichsinnig sich verjüngenden konischen Abschnitt (9) des Innenmantels der Aufnahmebohrung (5) abstützbar ist,
wobei der Neigungswinkel der Erzeugenden des konisch sich verjüngenden Abschnitts (8) der Spannzange (7a) relativ zur Drehachse (D) größer 2° ist und bevorzugt 8° gemäß ISO 15488 beträgt, wobei
die Spannzange (7a) zwei verschiedene Arten von Schlitzen (40, 41) aufweist, wobei die erste Art Schlitze (40) sich von dem in Bezug auf das Werkzeug vorderen Stirnende (13) der Spannzange weg erstreckt bis auf eine axiale Position, die geringer ist als die minimale Einstecktiefe, während die zweite Art Schlitze (41) von dem vorderen Ende der Spannzange beabstandet angebracht ist, wobei zumindest einige der Schlitze (41) der zweiten Art in Bezug auf das vordere Stirnende (13) der Spannzange (7a) an ihrem hinteren Ende in jeweils einer Entlastungsbohrung (42) münden und wobei in Bezug auf den Umfang der Spannzange (7a) jeweils zwischen zwei Schlitzen (40) der ersten Art ein Schlitz (41) der zweiten Art angeordnet ist, wobei die Schlitze (40) der ersten Art axial kürzer sind als die der zweiten Art (41), so dass über den gesamten Umfang der Spannzange (7a) betrachtet von den kürzeren Schlitzen (40) der ersten Art die doppelte Anzahl in Bezug auf die längeren Schlitze (41) der zweiten Art vorhanden ist,
**dadurch gekennzeichnet, dass**
sich dem in Richtung des zylindrischen Abschnitts konisch verjüngenden Abschnitt (8) in Richtung der Stirnseite eine umlaufende Nut (16) anschließt, auf die ein sich in Richtung des vorderen Stirnende (13) konisch verjüngender Abschnitt (14) folgt, der sich bis zum vorderen Stirnende (13) erstreckt, und dass
ein Überlappungsbereich B der Schlitze so angeordnet ist, dass er nicht im Bereich der Nut liegt, so dass der Werkzeugschaft bei ausreichender Einstecktiefe die Schlitze (40,41) gegeneinander abdichtet, so dass keine Flüssigkeit aus der Aufnahmebohrung (5) durch die Schlitze (40, 41) am Werkzeug vorbei in den Werkzeugarbeitsbereich austritt.

2. Spannzange (7a) nach Anspruch 1,
**dadurch gekennzeichnet, dass**
die Anzahl der Schlitze (40, 41) und ihre Breite so angepasst ist, dass der Spannbereich der Spannzange (7a) weniger als 0,5 mm beträgt.

3. Spannzange (7a) nach Anspruch 1,
**dadurch gekennzeichnet, dass**
der zylindrische Abschnitt (30) der Spannzange (7a) im Wesentlichen keine Schlitze (40, 41) aufweist, wobei der zylindrische Abschnitt vorzugsweise leicht ballig zum erleichterten Einführen der Spannzange in den Grundkörper ausgeführt ist.

4. Spannzange (7a) gemäß einem der vorhergehenden Ansprüche,
**dadurch gekennzeichnet, dass**
die Spannzange eine Nenngröße von 16 mm, 25 mm oder 32 mm aufweist, wobei
die Spannzange mit Nenngröße 16 mm einen maximalen Spanndurchmesser von 10 mm, einen Durchmesser des Zapfens (30) von 11 bis 14 mm, bevorzugt von 12 mm, und eine Länge des Zapfens (30) von 1 bis 20 mm, bevorzugt von 8,5 mm aufweist,
die Spannzange mit Nenngröße 25 mm einen maximalen Spanndurchmesser von 16 mm, einen Durchmesser des Zapfens (30) von 18,5 bis 21 mm, bevorzugt von 19,05 mm, und eine Länge des Zapfens (30) von 1 bis 20 mm, bevorzugt von 8,3 mm aufweist und
die Spannzange mit Nenngröße 32 mm einen maximalen Spanndurchmesser von 20 mm, einen Durchmesser des Zapfens (30) von 24 bis 29 mm, bevorzugt von 25 mm, und eine Länge des Zapfens (30) von 1 bis 25 mm, bevorzugt von 10,4 mm aufweist.

5. Spannvorrichtung (1a) für ein rotierendes Werkzeug umfassend:
einen Grundkörper (2a) mit einer zur Drehachse (D) zentrischen Aufnahmebohrung (5), in die ein Schaft eines Werkzeugs von einem Stirnende (6) des Grundkörpers (2a) her axial einsteckbar ist,
einer in der Aufnahmebohrung (5) axial beweglich angeordnete, den Schaft umschließende Spannzange (7a)
und eine die Spannzange (7a) relativ zur Aufnahmebohrung (5) axial in diese hineinzwingende Zangenspannvorrichtung, die insbesondere als eine Spannmutter (10a) mit einem Innengewinde (11) ausgebildet ist, das in Eingriff mit einem Außengewinde (12) des Grundkörpers (2a) steht,
**dadurch gekennzeichnet, dass**
die Spannzange (7a) nach einem der vorherigen Ansprüche ausgebildet ist,
wobei sich der im Wesentlichen vom vorderen Stirnende der Spannzange (7a) weg sich konisch verjüngenden Abschnitt (8) ihres Außenmantels an einem gleichsinnig sich verjüngenden konischen Abschnitt (9) des Innenmantels der Aufnahmebohrung (5) abstützt, und
wobei der Neigungswinkel der Erzeugenden des konisch sich verjüngenden Abschnitt (9) der Aufnahmebohrung (5) relativ zur Drehachse (D) größer 2° ist und bevorzugt 8° für die Aufnahme von Spannzangen gemäß ISO 15488 beträgt.

6. Spannvorrichtung (1a) nach Anspruch 5,
**dadurch gekennzeichnet, dass**
die radiale Wandstärke des Grundkörpers (2a) an dessen vorderen Stirnende (6) gleich oder größer als die durchschnittliche radiale Wandstärke der Spannmutter (10a) ist oder dass in Bezug auf die Anforderungen der ISO 15488 der Außendurchmesser des Grundkörpers (2a) an dessen vorderen Stirnende (6) unter Beibehaltung des durchschnittlichen Außendurchmesser der Spannmutter (10a) vergrößert ist.

7. Spannvorrichtung (1a) nach Anspruch 5 oder 6,
**dadurch gekennzeichnet, dass**
die in Bezug auf das vordere Stirnende (13) der Spannzange (7a) hintere radiale Seite der Nut (16) relativ zu dem vorderen Stirnende (6) des Grundkörpers (2a) im unverspannten Zustand einen axialen Abstand von weniger als 5 mm, bevorzugt weniger als 2 mm aufweist.

8. Spannvorrichtung (1a) nach einem der Ansprüche 5 bis 7,
**dadurch gekennzeichnet, dass**
zwischen Spannmutter und Grundkörper ein mehrgängiges Gewinde, insbesondere mit zwei oder drei Gängen, vorgesehen ist.

9. Spannvorrichtung (1a) nach einem der Ansprüche 5 bis 8,
**dadurch gekennzeichnet, dass**
die Spannmutter (10a) eine Anlagefläche für eine Spannzange (7, 7a), ein Innengewinde (11), das in ein Außengewinde (12) eines Grundkörpers (2a) greifen kann, und die Außenumfangskontur eines ungeradzahligen Vielkants aufweist oder eine im Wesentlichen runde Außenumfangskontur mit einer ungeradzahligen Anzahl umfangsmäßig, gleich beabstandeter axial verlaufender Nuten (50).

10. Spannvorrichtung (1a) nach Anspruch 9,
**dadurch gekennzeichnet, dass**
die Nuten einen kreisbogenförmigen Querschnitt aufweisen und/oder dass die Nuten (50b) eine Phase (53) aufweisen.

11. Spannvorrichtung (1a) nach einem der Ansprüche 9 oder 10,
**dadurch gekennzeichnet, dass**
die Nuten (50b) sich nur über einen axialen Bereich der Mutter (10b) erstrecken, der geringer ist als die axiale Erstreckung der Mutter (10b), so dass die Nuten (50b) einen einseitigen axialen Anschlag (54) für einen Spannschlüssel aufweisen.

## Claims

1. A collet chuck (7a) for a clamping device (1a) for a rotating tool, wherein the clamping device (1a) comprises a base (2a), which has a mounting hole (5) which is centric with the tool's axis of rotation (D) and into which a tool shank can be axially inserted from a front end (6) of the base (2a) and from a front end (13) of the collet chuck (7a), wherein the collet chuck (7a) can be arranged so as to be axially displaceable in the mounting hole (5) in order to surround the shank,
wherein
the collet chuck (7a), axially at the rear as seen from the front end (13) has a cylindrical section (30), which, along with a cylindrical section (31) of the mounting hole (5) can form a fit, especially a transition fit, preferably a joint fit and wherein the collect chuck (7a) has a section (8) of its outer sleeve which connects to the cylindrical section (30) and which essentially tapers conically into the direction of the cylindrical section, wherein the section (8) of the collet chuck (7a), which tapers conically, is supportable on a matching tapering conical section (9) of the inner sleeve of the mounting hole (5), wherein the inclination angle of the generatrix of the tapering conical section (8) of the clamping chuck (7a) relative to the rotation axis (D) is greater than 2° and is preferably 8° according to ISO 15488, wherein
the collet chuck (7a) has two different types of slots (40, 41), wherein the first type of slots (40) extends from the, relative to the tool, front end (13) of the collet chuck as far as an axial position, which is less than the minimum insertion depth, while the second type of slots (41) is spaced apart from the front end of the collet chuck (7a), wherein at least several of the slots (41) of the second type open into a relief bore (42) each at their rear end and wherein relative to the circumference of the collet chuck (7a), a slot (41) of the second type is arranged between each of two slots (40) of the first type, wherein the slots (40) of the first type are axially shorter than those of the second type (41), such that, viewed over the full circumference of the collet chuck (7a), there are twice as many of the shorter slots (40) of the first type relative to the longer slots (41) of the second type,
**characterized in that**
there is, into the direction of the front end, a circumferential groove (16) contiguous to the section which conically tapers into the direction of the cylindrical section, which groove is followed by a section (14) conically tapering into the direction of the front side end (13), which section extends to the front side end (13), and that
an overlapping region B of the slots is arranged such that it does not lie in the area of the groove so that the tool shaft, when inserted deep enough, seals the slots (40, 41) against one another so that no liquid exits the mounting hole (5) through the slots (40, 41) past the tool into the tool working area.

2. Collet chuck (7a) in accordance with claim 1,
**characterised by the fact that**
the number of the slots (40, 41) and their width are adjusted such that the clamping range of the collet chuck (7a) is less than 0.5 mm.

3. Collet chuck (7a) in accordance with claim 1,
**characterised by the fact that**
the cylindrical section (30) of the collet chuck (7a) essentially has not slots (40, 41), the cylindrical section preferably being slightly spherically turned for easier insertion of the collet chuck into the base.

4. Collet chuck (7a) in accordance with any of the previous claims,
**Characterized in that**
the collet chuck has a nominal size of 16 mm, 25 mm or 32 mm,
wherein the collet chuck having a nominal size of 16 mm has a maximum clamping diameter of 10 mm, a journal (30) diameter of 11 to 14 mm, preferably of 12 mm, and a journal (30) length of 1 to 20 mm, preferably of 8.5 mm,
the collet chuck having a nominal size of 25 mm has a maximum clamping diameter of 16 mm, a journal (30) diameter of 18.5 to 21 mm, preferably of 19.05 mm, and a journal (30) length of 1 to 20 mm, preferably of 8.3 mm and
the collet chuck having a nominal size of 32 mm has a maximum clamping diameter of 20 mm, a diameter of the journal (30) of 24 to 29 mm, preferably of 25 mm, and a journal (30) length of 1 to 25 mm, preferably of 10.4 mm

5. Clamping device (1a) for a rotating tool, comprising:
a base (2a), which has a mounting hole (5) which is centric with the axis of rotation (D), into which a tool shank can be axially inserted from a front end (6) of the base (2a),
a collet chuck (7a) that is axially displaceable in the mounting hole (5) and surrounds the shank,
and a chuck-clamping device, especially configured as a locknut (10a) which has an internal thread (11) that engages with an external thread (12) of the base (2a), said chuck-clamping device forcing the collet chuck (7a) into the mounting hole (5) axially, relative to the mounting hole (5),
**characterised by**
the collet chuck (7a) being configured in accordance with one of the previous claims,
wherein the section (8) of the outer sleeve of the collet chuck, which section essentially tapers conically from the front end of the collet chuck (7a) supports itself on a matching tapering conical section (9) of the inner sleeve of the mounting hole (5), and
wherein the inclination angle of the generatrix of the tapering conical section (9) of the mounting hole (5) relative to the rotation axis (D) is greater than 2° and is preferably 8° for receiving collect chucks according to ISO 15488.

6. Clamping device (1a) in accordance with claim 5,
**characterised by the fact that**
the radial wall thickness of the base (2a) at its front end (6) is equal to or greater than the average radial wall thickness of the locknut (10a) or that, with regard to the specifications of ISO 15488, the outer diameter of the base (2a) is enlarged at its front end (6) while the average outer diameter of the locknut (10a) is maintained.

7. Clamping device (1a) in accordance with claim 5 or 6,
**characterised by the fact that**
the rear radial side of the groove (16), with regard to the front end (13) of the collet chuck (7a), has, relative to the front end (6) of the base (2a) in the unclamped state, an axial spacing of less than 5 mm, preferably less than 2 mm.

8. Clamping device (1a) in accordance with any of claims 5 to 7,
**characterised by the fact that**
a multiple thread, especially double a or triple thread is provided between locknut and base.

9. Clamping device (1a) in accordance with any of claims 5 to 8,
**characterised by the fact that**
the locknut (10a) has a contact surface for a collet chuck (7, 7a), an internal thread (11), which can engage with an external thread (12) of a base (2a), and has the outer circumferential contour of an odd-numbered polygon or an essentially circular outer circumferential contour with an odd number of axial grooves (50) equally spaced about the circumference.

10. Clamping device (1a) in accordance with claim 9,
**characterised by the fact that**
the grooves have a curvilinear cross-section and/or that the grooves (50b) have a chamfer (53).

11. Clamping device (1a) in accordance with any of claims 9 or 10,
**characterised by the fact that**
the grooves (50b) extend only over an axial area of the nut (10b), said area being smaller than the axial extension of the nut (10b), such that the grooves (50b) have a unilateral axial stop (54) for a chuck key.

## Revendications

1. Pince de serrage (7a) pour un dispositif de serrage (1a) pour un outil rotatif, ledit dispositif de serrage (1a) présentant un corps de base (2a) ayant un trou de logement (5) qui est centré par rapport à l'axe de rotation (D) et dans lequel une tige d'un outil peut être introduite axialement depuis une extrémité frontale (6) du corps de base (2a) et depuis une extrémité frontale (13) de la pince de serrage (7a), ladite pince de serrage (7a) pouvant être disposée de manière axialement déplaçable dans le trou de logement (5) afin d'entourer la tige,
dans laquelle la pince de serrage (7a) présente axialement à l'arrière, vue depuis l'extrémité frontale (13) avant, une portion cylindrique (30) qui, conjointement avec une portion cylindrique (31) du trou de logement (5), peut former un ajustement, en particulier un ajustement de transition, de préférence un ajustement d'assemblage, et ladite pince de serrage (7a) présente une portion (8) de sa surface latérale extérieure, qui suit la portion cylindrique (30) et se rétrécit coniquement en direction de la portion cylindrique, ladite portion (8) se rétrécissant coniquement de la pince de serrage (7a) pouvant être appuyée sur une portion (9) conique de la surface latérale intérieure du trou de logement (5), qui se rétrécit dans le même sens,
dans laquelle l'angle d'inclinaison de la génératrice de la portion (8) se rétrécissant coniquement de la pince de serrage (7a), par rapport à l'axe de rotation (D), est supérieur à 2° et de préférence de 8° selon ISO 15488,
dans laquelle la pince de serrage (7a) présente deux types différents de fentes (40, 41), le premier type de fente (40) s'étendant dans la direction opposée à l'extrémité frontale (13) avant par rapport à l'outil, de la pince de serrage, jusqu'à une position axiale qui est inférieure à la profondeur minimale d'introduction, tandis que le deuxième type de fente (41) est disposé de manière à être espacé de l'extrémité avant de la pince de serrage, au moins quelques-unes des fentes (41) du deuxième type débouchant à leur extrémité arrière, par rapport à l'extrémité frontale (13) avant de la pince de serrage (7a), dans respectivement un trou d'équilibrage (42), et, par rapport à la circonférence de la pince de serrage (7a), une fente (41) du deuxième type étant disposée respectivement entre deux fentes (40) du premier type, les fentes (40) du premier type étant axialement plus courtes que celles du deuxième type (41), de sorte que, vu sur l'ensemble de la circonférence de la pince de serrage (7a), le nombre existant des fentes (40) plus courtes du premier type est le double de celui des fentes (41) plus longues du deuxième type,
**caractérisée par le fait que** la portion (8) se rétrécissant coniquement en direction de la portion cylindrique est suivie, en direction de la face frontale, d'une rainure (16) périphérique laquelle est suivie d'une portion (14) qui se rétrécit coniquement en direction de l'extrémité frontale (13) avant et s'étend jusqu'à l'extrémité frontale (13) avant,
et qu'une zone de recouvrement B des fentes est disposée de telle manière qu'elle ne se trouve pas au niveau de la rainure de sorte que la tige de l'outil, avec une profondeur d'introduction suffisante, rend étanche les fentes (40, 41) les unes par rapport aux autres de sorte qu'aucun liquide ne sort du trou de logement (5) à travers les fentes (40, 41), en passant devant l'outil, pour entrer dans la zone de travail de l'outil.

2. Pince de serrage (7a) selon la revendication 1, **caractérisée par le fait que** le nombre des fentes (40, 41) et leur largeur est adapaté(e) de telle sorte que la zone de serrage de la pince de serrage (7a) est inférieure à 0,5 mm.

3. Pince de serrage (7a) selon la revendication 1, **caractérisée par le fait que** la portion cylindrique (30) de la pince de serrage (7a) ne présente pour l'essentiel pas de fentes (40, 41), ladite portion cylindrique étant réalisée, de préférence, de manière légèrement bombée pour faciliter l'introduction de la pince de serrage dans le corps de base.

4. Pince de serrage (7a) selon l'une quelconque des revendications précédentes, **caractérisée par le fait que** la pince de serrage présente une taille nominale de 16 mm, de 25 mm ou de 32 mm,
la pince de serrage ayant une taille nominale de 16 mm présentant un diamètre de serrage maximal de 10 mm, un diamètre du tenon (30) compris entre 11 et 14 mm, de préférence de 12 mm, et une longueur du tenon (30) comprise entre 1 et 20 mm, de préférence de 8,5 mm,
la pince de serrage ayant une taille nominale de 25 mm présentant un diamètre de serrage maximal de 16 mm, un diamètre du tenon (30) compris entre 18,5 et 21 mm, de préférence de 19,05 mm, et une longueur du tenon (30) comprise entre 1 et 20 mm, de préférence de 8,3 mm, et
la pince de serrage ayant une taille nominale de 32 mm présentant un diamètre de serrage maximal de 20 mm, un diamètre du tenon (30) compris entre 24 et 29 mm, de préférence de 25 mm, et une longueur du tenon (30) comprise entre 1 et 25 mm, de préférence de 10,4 mm.

5. Dispositif de serrage (1a) pour un outil rotatif, comprenant :
un corps de base (2a) ayant un trou de logement (5) qui est centré par rapport à l'axe de rotation (D) et dans lequel une tige d'un outil peut être introduite axialement depuis une extrémité frontale (6) du corps de base (2a),
une pince de serrage (7a) disposée de manière axialement déplaçable dans le trou de logement (5) et entourant la tige, et
un dispositif de serrage de pince qui force axialement la pince de serrage (7a) dans le trou de logement (5) par rapport à celui-ci et qui, en particulier, est réalisé en tant qu'écrou de serrage (10a) ayant un filetage intérieur (11) qui est en prise avec un filetage extérieur (12) dudit corps de base (2a),
**caractérisé par le fait que**
la pince de serrage (7a) est réalisée selon l'une quelconque des revendications précédentes, dans lequel la portion (8) de sa surface latérale extérieure, qui se rétrécit coniquement pour l'essentiel dans la direction opposée à l'extrémité frontale avant de la pince de serrage (7a) s'appuie sur une portion (9) conique de la surface latérale intérieure du trou de logement (5), qui se rétrécit dans le même sens, et
dans lequel l'angle d'inclinaison de la génératrice de la portion (9) du trou de logement (5), qui se rétrécit coniquement, par rapport à l'axe de rotation (D) est supérieur à 2° et de préférence de 8° pour la réception de pinces de serrage selon ISO 15488.

6. Dispositif de serrage (1a) selon la revendication 5, **caractérisé par le fait que** l'épaisseur de paroi radiale du corps de base (2a) sur son extrémité frontale (6) avant est égale ou supérieure à l'épaisseur de paroi radiale moyenne de l'écrou de serrage (10a), ou que, par rapport aux exigences de la ISO 15488, le diamètre extérieur du corps de base (2a) sur son extrémité frontale (6) avant est agrandi tout en maintenant le diamètre extérieur moyen de l'écrou de serrage (10a).

7. Dispositif de serrage (1a) selon la revendication 5 ou 6, **caractérisé par le fait que** la face radiale arrière de la rainure (16), par rapport à l'extrémité frontale (13) avant de la pince de serrage (7a), présente, en état non serré, une distance axiale inférieure à 5 mm, de préférence inférieure à 2 mm, par rapport à l'extrémité frontale (6) avant du corps de base (2a).

8. Dispositif de serrage (1a) selon l'une quelconque des revendications 5 à 7, **caractérisé par le fait qu'**un filetage multiple, en particulier à deux ou trois pas, est prévu entre l'écrou de serrage et le corps de base.

9. Dispositif de serrage (1a) selon l'une quelconque des revendications 5 à 8, **caractérisé par le fait que** l'écrou de serrage (10a) présente une surface d'appui pour une pince de serrage (7, 7a), un filetage intérieur (11) qui peut engrener dans un filetage extérieur (12) d'un corps de base (2a) et le contour circonférentiel extérieur d'un polygone à nombre impair ou un contour circonférentiel extérieur pour l'essentiel rond ayant un nombre impair de rainures (50) s'étendant axialement et espacées de manière égale en circonférence.

10. Dispositif de serrage (1a) selon la revendication 9, **caractérisé par le fait que** les rainures présentent une section transversale en arc de cercle et/ou que les rainures (50b) présentent un chanfrein (53).

11. Dispositif de serrage (1a) selon l'une quelconque des revendications 9 ou 10, **caractérisé par le fait que** les rainures (50b) ne s'étendent que sur une zone axiale de l'écrou (10b) qui est inférieure à l'extension axiale de l'écrou (10b) de sorte que les rainures (50b) présentent une butée axiale (54) unilatérale pour une clé de serrage.
